# EUROPEAN PATENT SPECIFICATION

(11) **EP 4 106 087 B1**
(45) Date of publication and mention of the grant of the patent: **09.08.2023**
(21) Application number: 21799163.7
(22) Date of filing: 30.04.2021
(51) Int. Cl.: H01M 50/147, H01M 50/166, H01M 50/148, H01M 50/15, H01M 50/531, H01M 50/545, H01M 50/55

(54) **BATTERY CELL, BATTERY AND POWER-CONSUMING DEVICE**
BATTERIEZELLE, BATTERIE UND STROMVERBRAUCHSVORRICHTUNG
ÉLÉMENT DE BATTERIE, BATTERIE ET DISPOSITIF DE CONSOMMATION D'ÉNERGIE

(43) Date of publication of application: 21.12.2022
(60) Divisional application: 23182314.7
(73) Proprietor: Contemporary Amperex Technology Co., Limited, Jiaocheng District Ningde City, Fujian 352100 (CN)
(72) Inventor: WANG, Lei, Ningde City Fujian 352100 (CN); ZHOU, Wenlin, Ningde City Fujian 352100 (CN); LI, Xing, Ningde City Fujian 352100 (CN); WANG, Peng, Ningde City Fujian 352100 (CN); LI, Quankun, Ningde City Fujian 352100 (CN); CHEN, Xingdi, Ningde City Fujian 352100 (CN); ZHENG, Yulian, Ningde City Fujian 352100 (CN)
(74) Representative: Herrero & Asociados, S.L.
(86) International application number: PCT/CN2021/091337
(87) International publication number: WO 2022/226965

(56) References cited:
- EP-A1- 3 333 931
- WO-A1-2018/221853
- CN-A- 112 310 517
- CN-U- 209 087 917
- CN-U- 209 747 685
- CN-U- 211 376 679
- US-A1- 2016 133 886

## Description

### FIELD OF TECHNOLOGY

This application relates to the technical field of batteries, and more specifically, to a battery cell, a battery, a power consumption device, and a battery manufacturing method and device.

### BACKGROUND

Batteries are widely used in electronic devices, such as mobile phones, notebook computers, storage battery cars, electric vehicles, electric airplanes, electric ships, electric toy cars, electric toy ships, electric toy airplanes, and electric tools.

In battery technologies, both safety and performance of the battery need to be considered, and energy density of the battery affects the performance of the battery. Therefore, how to increase the energy density of the battery is a technical problem that needs to be resolved urgently in battery technologies.

CN211376679U discloses a secondary battery, a top cover assembly for the secondary battery, a battery module and a device using the secondary battery as a power supply. The secondary battery includes: a case having an opening; the electrode assembly is accommodated in the shell and comprises a first pole piece, a second pole piece and a diaphragm for separating the first pole piece from the second pole piece; and the top cover assembly is connected to the shell and covers the opening of the shell. The top cover assembly comprises a top cover plate which is provided with an electrode lead-out hole and a blind hole; an electrode terminal covering the electrode lead-out hole; one end of the connecting piece is embedded into the blind hole and connected to the top cover plate, and the other end of the connecting piece penetrates through the electrode terminal and is connected to the electrode terminal.

CN209747685U discloses a battery pack cooling structure and a power battery pack. The battery pack cooling structure provided by the utility model can cool a plurality of batteries arranged in parallel. Each battery comprises a battery cover plate, and an insulating spacer is arranged between every two adjacent batteries; the battery pack cooling structure comprises a cooling pipeline fixedly arranged at the top of the battery cover plate, and cooling units which are fixedly arranged on the insulating spacers and can be attached to the side walls of the batteries. Wherein the cooling pipeline is provided with a liquid inlet end and a liquid outlet end, each cooling unit comprises cooling passages which are arranged on two opposite sides of the insulating spacer and are communicated with each other, and each cooling unit is provided with a liquid inlet and a liquid outlet which are formed in the corresponding cooling passage. And each cooling pipeline is connected in series with thecooling unit end to end and is communicated with an external liquid supply device, so that the circulation of cooling liquid in the battery pack cooling structure can be formed. According to the battery pack cooling structure, the operating temperature of the power battery pack can be reduced, so that the operating stability of the power battery pack is improved.

CN209087917U discloses a secondary battery. The secondary battery comprises a shell, the electrode assembly is arranged in the accommodating cavity of the shell and comprises a main body part; the top cover assembly comprises a top cover plate and an electrode terminal, the top cover plate is provided with a terminal hole penetrating in the height direction, the electrode terminal comprisesa base body and a cover piece, the base body covers the terminal hole, the base body is provided with a first guide groove extending in the height direction and communicated with the containing cavity, and a second guide groove intersecting with the first guide groove is formed between the base body and the cover piece; the conductive part is provided with a first connecting part and a second connecting part which are arranged in an intersecting mode, the first connecting part is connected with the body part and extends into the first guide groove, the second connecting part is located in thesecond guide groove and abuts against the base body, and the cover piece is located on the side, away from the electrode assembly, of the second connecting part. According to the secondary battery provided by the embodiment of the utility model, metal chips generated in the connecting process of the electrode assembly and the electrode terminal can be prevented from splashing onto the electrode assembly, and the use safety of the secondary battery is effectively ensured.

### SUMMARY

The embodiments of this application provide a battery cell, a battery, a power consumption device, and a battery manufacturing method and device, which is beneficial to increase the energy density of the battery cell.

In the first aspect, an embodiment of this application provides a battery cell, including: a housing with an opening; an electrode assembly for being accommodated in the housing, where the electrode assembly includes a main body portion and a tab; and an end cover assembly, including an end cover and an electrode terminal, the end cover is configured to cover the opening, the electrode terminal is mounted on the end cover, and the electrode terminal is configured to be electrically connected to the tab, where the end cover includes a first body and a first protruding portion, the first body has a first inner surface and a first outer surface arranged opposite to each other in a thickness direction of the first body, the first protruding portion protrudes from the first outer surface in a direction departing from the main body portion, a first recessed portion recessed from the first inner surface in the direction departing from the main body portion is formed at a position corresponding to the first protruding portion on the first body, and the first recessed portion is configured to accommodate at least a part of the tab; wherein the end cover assembly further includes a first insulating piece; and the first insulating piece is disposed on a side of the end cover facing the main body portion, and the first insulating piece is configured to isolate the end cover from the electrode assembly; wherein the first insulating piece includes a second body and a second protruding portion, the second body has a second inner surface and a second outer surface arranged opposite to each other in the thickness direction, the second outer surface faces the first inner surface, the second protruding portion protrudes from the second outer surface in the direction departing from the main body portion, and a second recessed portion recessed from the second inner surface in the direction departing from the main body portion is formed at a position corresponding to the second protruding portion on the second body; and the first recessed portion is configured to accommodate the second protruding portion, and the second recessed portion is configured to accommodate at least a part of the tab.

In the foregoing technical solution, the first recessed portion recessed from the first inner surface in the direction departing from the main body portion is formed at the position corresponding to the first protruding portion on the first body of the end cover, and the first recessed portion can accommodate at least a part of the tab, so as to provide more space for the main body portion of the electrode assembly, which is beneficial to increase an energy density of the battery cell. In addition, the first protruding portion can strengthen the position where the first recessed portion is disposed on the first body, thereby improving the strength of the end cover. The arrangement of the first protruding portion can also enable the first recessed portion to recess as far as possible in the direction departing from the main body portion, which is beneficial for the tab to be accommodated in the first recessed portion.

In some embodiments, the first body is configured to be attached to a thermal management component, and the thermal management component is configured to adjust a temperature of the battery cell.

In the foregoing technical solution, the first body may be attached to the thermal management component, and the battery cell may transfer heat with the heat management component through the first body, so that the temperature of the battery cell can be adjusted by the thermal management component.

In some embodiments, the first outer surface includes a heat dissipation area, a projection of the heat dissipation area in the thickness direction does not overlap a projection of the first protruding portion in the thickness direction, and the heat dissipation area is configured to be attached to the thermal management component.

In the foregoing technical solution, the projection of the heat dissipation area of the first outer surface in the thickness direction of the first body does not overlap the projection of the first protruding portion in the thickness direction of the first body. After the thermal management component is attached to the heat dissipation area of the first outer surface, the thermal management component will not overlap the first protruding portion, so that the first protruding portion and the thermal management component share the space in the thickness direction of the first body, which is beneficial to increase the energy density of the battery.

In some embodiments, the first recessed portion has a first bottom surface; and in the thickness direction, the first bottom surface is farther from the main body portion than the first outer surface.

In the foregoing technical solution, the first bottom surface is farther from the main body portion than the first outer surface in the thickness direction of the first body, so that the first recessed portion is recessed into the first protruding portion, which increases a recess depth of the first recessed portion, thereby increasing the space of the first recessed portion for accommodating the tab.

In some embodiments, the electrode terminal is mounted on the first protruding portion.

In the foregoing technical solution, the electrode terminal is mounted on the first protruding portion. Since the first protruding portion protrudes from the first outer surface in the direction departing from the main body portion, it is convenient to output electric energy of the battery cell through the electrode terminal.

In some embodiments, the end cover assembly includes two electrode terminals, and the two electrode terminals are mounted on one first protruding portion; or the end cover assembly includes two electrode terminals and two first protruding portions arranged along a length direction of the first body, and the two electrode terminals are respectively mounted on the two first protruding portions.

In the foregoing technical solution, when the end cover assembly includes two electrode terminals, the two electrode terminals may be mounted on one first protruding portion, or the two electrode terminals may be respectively mounted on the two first protruding portions.

In the foregoing technical solution, the side of the end cover facing the main body portion is provided with the first insulating piece. The first insulating piece can isolate the end cover from the electrode assembly, and reduce the risk of battery cell short circuit caused by contact between the end cover and the electrode assembly.

In the foregoing technical solution, the second recessed portion of the first insulating piece serves to accommodate the tab, so as to provide more space for the main body portion of the electrode assembly. The arrangement of the second protruding portion can enable the second recessed portion to recess as far as possible in the direction departing from the main body portion, which is beneficial for the tab to be accommodated in the second recessed portion. In addition, since the second protruding portion of the first insulating piece is accommodated in the first recessed portion, the first insulating piece and the end cover are more compact, and the space occupied by the first insulating piece inside the housing is reduced, which can provide more space for the main body portion of the electrode assembly, and is beneficial to increase the energy density of the battery cell.

In some embodiments, the battery cell further includes a current collecting member, and the electrode terminal is electrically connected to the tab through the current collecting member; where the tab includes a first connection portion for being connected to the current collecting member, and at least a part of the first connection portion is accommodated in the first recessed portion.

In the foregoing technical solution, the at least a part of the first connection portion of the tab for being connected to the current collecting member is accommodated in the first recessed portion, which can provide more space for the main body portion of the electrode assembly, and is beneficial to increase the energy density of the battery cell.

In some embodiments, the current collecting member has a third inner surface facing the main body portion, and the third inner surface is farther from the main body portion than the first inner surface.

In the foregoing technical solution, the third inner surface of the current collecting member is farther from the main body portion than the first inner surface, so that the current collecting member is accommodated in the first recessed portion, which can further provide more space for the main body portion, and is beneficial to increase the energy density of the battery cell.

In the second aspect, an embodiment of this application provides a battery, including a box body and the battery cell according to any embodiment of the first aspect, where the box body is used to accommodate the battery cell.

In some embodiments, the battery further includes a thermal management component, the thermal management component is attached to the first body, and the thermal management component is configured to adjusting a temperature of the battery cell.

In the foregoing technical solution, heat transfer between the battery cell and the thermal management component can be realized by attaching the thermal management component to the first body, so that the temperature of the battery cell can be adjusted by the thermal management component.

In some embodiments, the thermal management component is located at the bottom of the battery cell, and the thermal management component is configured to support the first body.

In the foregoing technical solution, the thermal management component is supported on the first body, that is, the thermal management component not only serves to manage the heat of the battery cell through the first body, but also serves to support the first body, so that the first protruding portion and the heat management component share the space in the thickness direction of the first body, which is beneficial to increase the energy density of the battery.

In some embodiments, the first protruding portion has a third outer surface departing from the first body, and the heat management component has a fourth outer surface departing from the first body, and in the thickness direction, the fourth outer surface is closer to the main body portion than the third outer surface, or the fourth outer surface is flush with the third outer surface.

In the foregoing technical solution, the fourth outer surface is closer to the main body portion than the third outer surface in the thickness direction, or the fourth outer surface is flush with the third outer surface. When the battery is impacted on the bottom, an impact force received by the battery may be transmitted to the first protruding portion to disperse the impact force through the end cover, and reduce a risk of the impact force directly acting on the thermal management component and damaging the thermal management component.

In some embodiments, the battery further includes a second insulating piece, and in the thickness direction, the second insulating piece is disposed on a side of the first body departing from the main body portion, and the second insulating piece covers the thermal management component and at least part of the first protruding portion.

In the foregoing technical solution, the second insulating piece is disposed on the side of the first body departing from the main body portion, and the second insulating piece covers the thermal management component and at least part of the first protruding portion, and the second insulating piece serves to insulate and isolate the thermal management component, so as to reduce a conductive risk of the thermal management component.

In some embodiments, the second insulating piece is provided with a through hole for the electrode terminal to extend out.

In the foregoing technical solution, the second insulating piece is provided with the through hole for the electrode terminal to extend out, which facilitates electrical connection of a plurality of battery cells.

In some embodiments, an accommodation gap is formed between the thermal management component and a bottom wall of the box body; and the accommodation gap is configured to accommodate at least a part of the electrode terminal.

In the foregoing technical solution, at least a part of the electrode terminal is accommodated in the accommodation gap between the thermal management component and the bottom wall of the box body. This makes reasonable use of the accommodation gap between the thermal management component and the bottom wall of the box body, and is beneficial to increase the energy density of the battery.

In some embodiments, the battery further includes a bus component, the bus component is configured to realize electrical connection of a plurality of battery cells; and the bus component is connected to the electrode terminal, and the bus component is entirely accommodated in the accommodation gap.

In the foregoing technical solution, the bus component connected to the electrode terminal is entirely accommodated in the accommodation gap. This makes reasonable use of the accommodation gap between the bottom wall of the box body and the thermal management component, reduce the space occupied by the bus component inside the box body, and is beneficial to increase the energy density of the battery.

In some embodiments, the thermal management component is provided with an avoidance hole, the avoidance hole is configured to accommodate at least a part of the first protruding portion.

In the foregoing technical solution, at least a part of the first protruding portion is accommodated in the avoidance hole on the thermal management component, so that the battery cell and the thermal management component are more compact, and the first protruding portion and the thermal management component share the space in the thickness direction of the first body, which is beneficial to increase the energy density of the battery.

In the third aspect, an embodiment of this application provides a power consumption device, including the battery according to any embodiment of the second aspect.

In the fourth aspect, an embodiment of this application provides a battery manufacturing method, where the method includes: providing a box body; providing a battery cell, where the battery cell includes: a housing with an opening; an electrode assembly for being accommodated in the housing, where the electrode assembly includes a main body portion and a tab; and an end cover assembly, including an end cover and an electrode terminal, where the end cover is configured to cover the opening, the electrode terminal is mounted on the end cover, and the electrode terminal is configured to be electrically connected to the tab; where the end cover includes a first body and a first protruding portion, the first body has a first inner surface and a first outer surface arranged opposite to each other in a thickness direction of the first body, the first protruding portion protrudes from the first outer surface in a direction departing from the main body portion, a first recessed portion recessed from the first inner surface in the direction departing from the main body portion is formed at a position corresponding to the first protruding portion on the first body, and the first recessed portion is configured to accommodate at least a part of the tab; and accommodating the battery cell in the box body.

In some embodiments, the method further includes: providing a thermal management component, where the thermal management component is configured to adjust a temperature of the battery cell; and attaching the first body to the thermal management component.

In the fifth aspect, an embodiment of this application provides a battery manufacturing device, including: a first providing apparatus configured to provide a box body; and a second providing apparatus configured to provide a battery cell, where the battery cell includes: a housing with an opening; an electrode assembly for being accommodated in the housing, where the electrode assembly includes a main body portion and a tab; and an end cover assembly, including an end cover and an electrode terminal, where the end cover is configured to cover the opening, the electrode terminal is mounted on the end cover, and the electrode terminal is configured to be electrically connected to the tab; where the end cover includes a first body and a first protruding portion, the first body has a first inner surface and a first outer surface arranged opposite to each other in a thickness direction of the first body, the first protruding portion protrudes from the first outer surface in a direction departing from the main body portion, a first recessed portion recessed from the first inner surface in the direction departing from the main body portion is formed at a position corresponding to the first protruding portion on the first body, and the first recessed portion is configured to accommodate at least a part of the tab; and an assembling apparatus configured to accommodate the battery cell in the box body.

### BRIEF DESCRIPTION OF THE DRAWINGS

To illustrate the technical solutions of the embodiments of this application more clearly, the following will briefly introduce the drawings that need to be used in the embodiments of this application. Obviously, the drawings described below are merely some embodiments of this application, and for a person of ordinary skill in the art, other drawings may also be obtained based on the drawings without creative work.
FIG. 1 is a schematic structural view of a vehicle according to some embodiments of this application;
FIG. 2 is a schematic structural view of a battery according to some embodiments of this application;
FIG. 3 is a schematic structural view of a battery module in FIG. 2;
FIG. 4 is an exploded view of a battery cell according to some embodiments of this application;
FIG. 5 is a partially sectioned view of a battery cell shown in FIG. 4;
FIG. 6 is an exploded view of an end cover assembly shown in FIG. 5;
FIG. 7 is a partially enlarged view of A of a battery cell shown in FIG. 5;
FIG. 8 is a schematic view of connection between a battery cell and a thermal management component shown in FIG. 5;
FIG. 9 is a schematic structural view of an end cover shown in FIG. 8;
FIG. 10 is a schematic view of installation of a battery according to some embodiments of this application;
FIG. 11 is a flowchart of a battery manufacturing method according to some embodiments of this application;
FIG. 12 is a flowchart of a battery manufacturing method according to some other embodiments of this application; and
FIG. 13 is a schematic block view of a battery manufacturing device according to some embodiments of this application.

In the drawings, the views are not drawn to actual scale.

### DETAILED DESCRIPTION OF THE EMBODIMENTS

To make objectives, technical solutions, and advantages of the embodiments of this application clearer, the technical solutions in the embodiments of this application will be clearly described below in combination with the accompanying drawings in the embodiments of this application. Obviously, the described embodiments are a part of the embodiments of this application, rather than all of the embodiments.

In this application, the battery cell may include a lithium ion secondary battery, a lithium ion primary battery, a lithium sulfur battery, a sodium lithium ion battery, a sodium ion battery, a magnesium ion battery, or the like. The embodiments of this application set no limitation thereto. The battery cell may be cylindrical, flat, rectangular, or in other shapes. The embodiments of this application also set no limitation thereto. The battery cells are usually divided into three types according to encapsulation methods: a cylindrical battery cell, a square battery cell, and a soft pack battery cell. The embodiments of this application set no limitation thereto.

The battery mentioned in the embodiments of this application refers to a single physical module that includes one or more battery cells to provide higher voltage and capacity. For example, the battery mentioned in this application may include a battery module, a battery pack, or the like. The battery usually includes a box body for encapsulating one or more battery cells. The box body may prevent liquid or other foreign matters from affecting charging or discharging of the battery cell.

The battery cell includes an electrode assembly and an electrolyte solution. The electrode assembly includes a positive electrode plate, a negative electrode plate, and an isolating membrane. The battery cell mainly operates by metal ions moving between the positive electrode plate and the negative electrode plate. The positive electrode plate includes positive current collectors and positive active substance layers. The positive active substance layer is coated on a surface of the positive current collector. A positive current collector that is not coated with the positive active substance layer protrudes from the positive current collector that has been coated with the positive active substance layer, and the positive current collector that is not coated with the positive active substance layer serves as a positive tab. Taking a lithium ion battery as an example, material of the positive current collector may be aluminum, and the positive active substance may be lithium cobaltate, lithium iron phosphate, ternary lithium, lithium manganate, or the like. The negative electrode plate includes negative current collectors and negative active substance layers. The negative active substance layer is coated on a surface of the negative current collector. A negative current collector that is not coated with the negative active substance layer protrudes from the negative current collector that has been coated with the negative active substance layer, and the negative current collector that is not coated with the negative active substance layer serves as a negative tab. Material of the negative current collector may be copper, and negative active substance may be carbon, silicon, or the like. To ensure that large currents are passed without fusing, there are a plurality of positive tabs stacked together, and there are also a plurality of negative tabs stacked together. Material of the isolating membrane may be polypropylene (PP), polyethylene (PE), or the like. In addition, the electrode assembly may be in a winding structure or a laminated structure. This is not limited in the embodiments of this application.

Many design factors should also be considered in development of battery technologies, for example, performance parameters such as cycle life, discharge capacity, charge and discharge rate, and energy density.

At present, the battery cell usually includes a housing, an electrode assembly, and an end cover assembly. The end cover assembly covers an opening of the housing to provide a hermetic space for the electrode assembly and the electrolyte solution.

The applicant found that in the battery cell, after the opening of the housing is covered with the end cover assembly, the tab of the electrode assembly is located in the housing, and the tab occupies a part of the space inside the housing. As a result, the space inside the housing that can be provided to a main body portion of the electrode assembly is reduced, resulting in a reduced energy density of the battery cell.

In view of this, the embodiments of this application provide a technical solution. The battery cell includes a housing, an electrode assembly, and an end cover assembly. The electrode assembly is configured to be accommodated in the housing, and the electrode assembly includes a main body portion and a tab. The end cover assembly includes an end cover and an electrode terminal, where the end cover is configured to cover the opening, the electrode terminal is mounted on the end cover, and the electrode terminal is configured to be electrically connected to the tab. The end cover includes a first body and a first protruding portion, the first body has a first inner surface and a first outer surface arranged opposite to each other in a thickness direction of the first body, the first protruding portion protrudes from the first outer surface in a direction departing from the main body portion, a first recessed portion recessed from the first inner surface in the direction departing from the main body portion is formed at a position corresponding to the first protruding portion on the first body, and the first recessed portion is configured to accommodate at least a part of the tab, so as to make more space for the main body portion of the electrode assembly, which is beneficial to increase the energy density of the battery cell.

The technical solutions described in the embodiments of this application are applicable to batteries and power consumption devices using batteries.

The power consumption devices may be vehicles, mobile phones, portable devices, notebook computers, ships, spacecrafts, electric toys, electric tools, and the like. The vehicles may be fuel vehicles, gas vehicles or new energy vehicles, the new energy vehicles may be pure electric vehicles, hybrid vehicles, extended-range vehicles, or the like; the spacecrafts include airplanes, rockets, space shuttles, spacecrafts, and the like; the electric toys include fixed or mobile electric toys such as game consoles, electric car toys, electric ship toys, electric airplane toys, and the like; the electric tools include metal cutting electric tools, grinding electric tools, assembly electric tools, and railway electric tools, for example, electric drills, electric grinders, electric wrenches, electric screwdrivers, electric hammers, electric impact drills, concrete vibrators, and electric planers. The embodiments of this application set no special limitation on the foregoing power consumption devices.

For ease of description, in the following embodiments, a vehicle is used as the electric device for description.

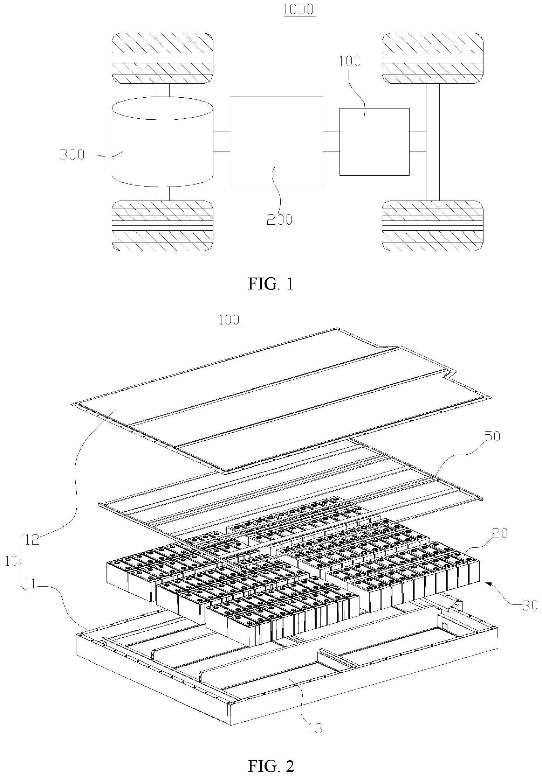

Please refer to FIG. 1, FIG. 1 is a schematic structural view of a vehicle 1000 according to some embodiments of this application. A battery 100 is provided inside the vehicle 1000, and the battery 100 may be disposed on the bottom, or head, or tail of the vehicle 1000. The battery 100 may be used to supply power to the vehicle 1000, for example, the battery 100 may be configured as an operating power source of the vehicle 1000.

The vehicle 1000 may further include a controller 200 and a motor 300. The controller 200 is used to control the battery 100 to supply power to the motor 300, for example, used to meet working power requirements of the vehicle 1000 during starting, navigating, and driving.

In some embodiments, the battery 100 may be configured not only as the operating power source for the vehicle 1000, but also as a driving power source for the vehicle 1000, replacing or partially replacing fuel or natural gas to provide driving power for the vehicle 1000.

In some embodiments, please refer to FIG. 2, FIG. 2 is a schematic structural view of a battery 100 according to some embodiments of this application. The battery 100 includes a box body 10 and a battery cell 20, and the battery cell 20 is accommodated in the box body 10.

The box body 10 may be in various shapes, such as a cylinder or a cuboid. Certainly, the box body 10 may be in various structures.

In some embodiments, the box body 10 may include a first part 11 and a second part 12, and the first part 11 and the second part 12 are covered with each other to define an accommodation space 13 for accommodating the battery cell 20. Certainly, a connection between the first part 11 and the second part 12 may be sealed by a sealing element, and the sealing element may be a sealing ring, a sealant, or the like.

The first part 11 and the second part 12 may be in various shapes, such as a cylinder or a cuboid. The first part 11 may be in a hollow structure with an opening on one side, and the second part 12 may also be in a hollow structure with an opening on one side. The opening side of the second part 12 is covered with the opening side of the first part 11 to form the box body 10 having the accommodation space 13. Certainly, the first part 11 may be in a hollow structure with an opening on one side, and the second part 12 is in a plate-shaped structure. The second part 12 is covered with the opening side of the first part 11 to form the box body 10 having the accommodation space 13.

In FIG. 2, the first part 11 is located at the bottom of the second part 12. In actual installation, when the battery 100 is turned upside down (the box body 10 is turned upside down), the battery 100 may also be turned down based on FIG. 2, so that the first part 11 is located on the top of the second part 12.

In the battery 100, there may be one or more battery cells 20. If there are a plurality of battery cells 20, the plurality of battery cells 20 may be connected in series or in parallel or in parallel-series. The parallel-series connection means that the plurality of battery cells 20 are both connected in series and in parallel.

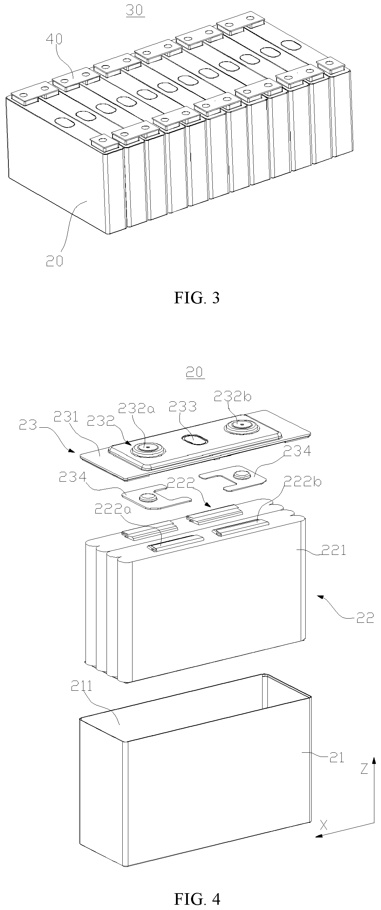

In some embodiments, please refer to FIG. 3. FIG. 3 is a schematic structural view of a battery module 30 shown in FIG. 2. The plurality of battery cells 20 may be connected in series or in parallel or in parallel-series to form the battery module 30, and then the plurality of battery modules 30 are connected in series or in parallel or in parallel-series to form an entirety and is accommodated in the box body 10 (shown in FIG. 2). In other embodiments, the plurality of battery cells 20 may also be directly connected in series or in parallel or in parallel-series, and then the entirety includes the plurality of battery cells 20 is accommodated in the box body 10.

In some embodiments, the battery 100 may further include a bus component 40, and the plurality of battery cells 20 may be electrically connected through the bus component 40 to realize connection in series or in parallel or in parallel-series of the plurality of battery cells 20.

The bus component 40 may be a metal conductor, such as copper, iron, aluminum, stainless steel, and aluminum alloy.

In some embodiments, the battery 100 may further include a thermal management component 50 (shown in FIG. 2), and the thermal management component 50 is configured to adjust a temperature of the battery cell 20.

The thermal management component 50 is a component configured to adjust the temperature of the battery cell 20. The adjusting the temperature herein refers to heating or cooling the battery cell 20, that is, the thermal management component 50 may be a heating component for heating the battery cell 20 or a cooling component for cooling the battery cell 20.

For example, the thermal management component 50 is configured to accommodate a fluid to adjust temperatures of the plurality of battery cells 20. The fluid herein may be liquid or gas, such as water, a mixture of water and ethylene glycol, or air.

The thermal management component 50 may be mounted inside the box body 10 (shown in FIG. 2), and the thermal management component 50 may be mounted in the first part 11 of the box body 10 or in the second part 12 of the box body 10.

A shape of the thermal management component 50 is not limited herein either. The thermal management component 50 may be in a shape of a flat plate as a whole, or may be formed by connecting a plurality of strip structures as long as the thermal management component 50 can conduct heat to the battery cell 20 or take away heat of the battery cell 20.

Please refer to FIG. 4. FIG. 4 is an exploded view of a battery cell 20 according to some embodiments of this application. The battery cell 20 may include a housing 21, electrode assembly 22, and an end cover assembly 23. The housing 21 has an opening, the electrode assembly 22 is accommodated in the housing 21, and the end cover assembly 23 is configured to cover the opening.

The housing 21 may be in various shapes, such as a cylinder or a cuboid. A shape of the housing 21 may be determined according to a specific shape of the electrode assembly 22. For example, if the electrode assembly 22 is in a cylindrical structure, the housing 21 may be in a cylindrical structure; if the electrode assembly 22 is in a cuboid structure, the housing 21 may be in a cuboid structure.

For example, in FIG. 4, the housing 21 is in a hollow cuboid structure with one end open.

The housing 21 may also be made of a plurality of materials, such as plastic, copper, iron, aluminum, stainless steel, or aluminum alloy. The embodiments of this application set no special limitation herein.

It should be noted that there may be one or more electrode assemblies 22 in the housing 21. For example, in FIG. 4, there are two electrode assemblies 22 in the housing 21, and the two electrode assemblies 22 are stacked in the housing 21.

In some embodiments, the electrode assembly 22 may include a main body portion 221 and a tab 222, and the tab 222 extends from the main body portion 221. The main body portion 221 may include a positive electrode plate, a negative electrode plate, and an isolating membrane. The main body portion 221 may be in a winding structure formed by winding the positive electrode plate, the isolating membrane, and the negative electrode plate. The main body portion 221 may also be in a stacking structure formed by stacking the positive electrode plate, the isolating membrane, and the negative electrode plate.

The positive electrode plate includes a positive current collector and a positive active substance layer coated on opposite sides of the positive current collector. The negative electrode plate includes a negative current collector and a negative active substance layer coated on opposite sides of the negative current collector. The main body portion 221 is a part of the electrode assembly 22 corresponding to an area where an electrode plate is coated with an active substance layer, and the tab 222 is an area where an electrode plate is not coated with the active substance layer. The tab 222 may be divided into a positive tab 222a and a negative tab 222b. The positive tab 222a is an area where the positive active substance layer is not coated on the positive electrode plate. The negative tab 222b is an area where the negative active substance layer is not coated on the negative electrode plate.

The positive tab 222a and the negative tab 222b may be located on a same side of the main body portion 221, or may be located on opposite sides of the main body portion 221 respectively. For example, FIG. 4 shows a case where the positive tab 222a and the negative tab 222b are located on the same side of the main body portion 221.

The isolating membrane is provided with a large number of penetrating micropores to allow electrolyte ions to pass through freely. Material of the isolating membrane may be polypropylene (PP), polyethylene (PE), or the like.

In some embodiments, please continue to refer to FIG. 4, the end cover assembly 23 may include an end cover 231 and an electrode terminal 232. The end cover 231 is configured to cover an opening of the housing 21. The electrode terminal 232 is mounted on the end cover 231, the electrode terminal 232 is used to be electrically connected to the tab 222, and the electrode terminal 232 is configured to output electric energy of the battery cell 20.

The end cover 231 covers the opening of the housing 21 to form a hermetic space 211 for accommodating the electrode assembly 22 and an electrolyte. The electrolyte may be an electrolyte solution.

There may be one or more electrode terminals 232 in the end cover assembly 23. Taking the end cover assembly 23 including two electrode terminals 232 as an example, and the two electrode terminals 232 may be a positive electrode terminal 232a and a negative electrode terminal 232b. The positive electrode terminal 232a is configured to be electrically connected to the positive tab 222a, and the negative electrode terminal 232b is configured to be electrically connected to the negative tab 222b.

In some embodiments, the end cover assembly 23 may further include a pressure relief mechanism 233 configured to relieve a pressure inside the battery cell 20 when an internal pressure or a temperature of the battery cell 20 reaches a threshold. The pressure relief mechanism 233 is mounted on the end cover 231.

The pressure relief mechanism 233 may be a component such as an explosion-proof valve, a rupture disc, a gas valve, or a pressure relief valve.

In some embodiments, the battery cell 20 may further include a current collecting member 234, and the electrode terminal 232 is electrically connected to the tab 222 through the current collecting member 234.

In FIG. 4, for example, the end cover assembly 23 includes two electrode terminals 232, and the two electrode terminals 232 are the positive electrode terminal 232a and the negative electrode terminal 232b. The positive electrode terminal 232a may be electrically connected to the positive tab 222a of the electrode assembly 22 through a current collecting member 234, and the negative electrode terminal 232b may be electrically connected to the negative tab 222b of the electrode assembly 22 through another current collecting member 234.

The current collecting member 234 may be a metal conductor, such as copper, iron, aluminum, stainless steel, and aluminum alloy.

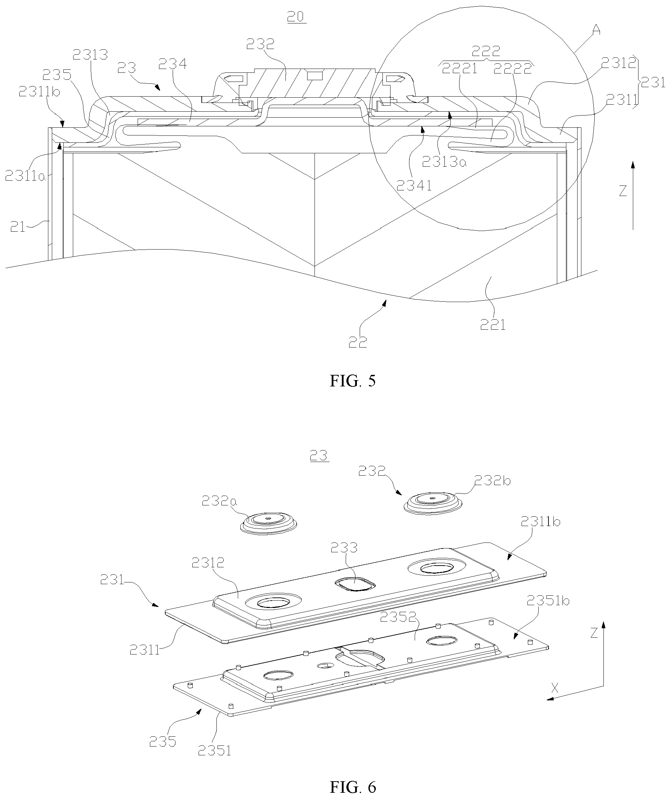

In the embodiments of this application, to increase the energy density of the battery cell 20, please refer to FIG. 5. FIG. 5 is a partially sectioned view of the battery cell 20 shown in FIG. 4. The end cover 231 includes a first body 2311 and a first protruding portion 2312, the first body 2311 has a first inner surface 2311a and a first outer surface 2311b arranged opposite to each other in a thickness direction Z of the first body, the first protruding portion 2312 protrudes from the first outer surface 2311b in a direction departing from the main body portion 221, a first recessed portion 2313 recessed from the first inner surface 2311a in the direction departing from the main body portion 221 is formed at a position corresponding to the first protruding portion 2312 on the first body 2311, and the first recessed portion 2313 is configured to accommodate at least a part of the tab 222.

Since the first recessed portion 2313 recessed from the first inner surface 2311a in the direction departing from the main body portion 221 is formed at the position corresponding to the first protruding portion 2312 on the first body 2311 of the end cover 231, and the first recessed portion 2313 can accommodate at least a part of the tab 222, so as to provide more space for the main body portion 221, which is beneficial to increase the energy density of the battery cell 20. In addition, the first protruding portion 2312 can strengthen the position where the first recessed portion 2313 is disposed on the first body 2311, thereby improving the strength of the end cover 231. The arrangement of the first protruding portion 2312 can also enable the first recessed portion 2313 to recess as far as possible in the direction departing from the main body portion 221, which is beneficial for the tab 222 to be accommodated in the first recessed portion 2313.

It should be noted that the first recessed portion 2313 serves to accommodate the tab 222. The first recessed portion 2313 may only accommodate at least a part of the positive tab 222a (not shown in FIG. 5), or may only accommodate at least a part of the negative tab 222b (not shown in FIG. 5). Certainly, the first recessed portion 2313 may also accommodate both at least a part of the positive tab 222a and at least a part of the negative tab 222b. For example, the positive tab 222a and the negative tab 222b are respectively located on opposite sides of the main body portion 221 in a thickness direction Z of the first body 2311. If the positive tab 222a is closer to the end cover 231 than the negative tab 222b, the first recessed portion 2313 can only accommodate at least a part of the positive tab 222a; if the positive tab 222a is farther from the end cover 231 than the negative tab 222b, the first recessed portion 2313 can only accommodate at least a part of the negative tab 222b. For another example, if the positive tab 222a and the negative tab 222b are located on a same side of the main body portion 221 in the thickness direction Z of the first body 2311, the first recessed portion 2313 can accommodate both at least a part of the positive tab 222a and at least a part of the negative tab 222b.

In some embodiment, please continue to refer to FIG. 5, the first recessed portion 2313 has a first bottom surface 2313a, and the first bottom surface 2313a is farther from the main body portion 221 than the first outer surface 2311b of the first body 2311 in the thickness direction Z of the first body 2311, so that the first recessed portion 2313 is recessed into the first protruding portion 2312, which increases a recess depth of the first recessed portion 2313, thereby increasing the space of the first recessed portion 2313 for accommodating the tab 222.

In other embodiments, the first bottom surface 2313a of the first recessed portion 2313 may also be flush with the first outer surface 2311b of the first body 2311; in the thickness direction Z of the first body 2311, the first bottom surface 2313a may be closer to the main body portion 221 than the first outer surface 2311b of the first body 2311.

In some embodiments, when the electrode terminal 232 is electrically connected to the tab 222 through the current collecting member 234, the tab 222 may include a first connection portion 2221 for being connected to the current collecting member 234, and at least part of the first connection portion 2221 is accommodated in the first recessed portion 2313, so as to provide more space for the main body portion 221, which is beneficial to increase the energy density of the battery cell 20.

Optionally, the current collecting member 234 has a third inner surface 2341 facing the main body portion 221, and the third inner surface 2341 is farther from the main body portion 221 than the first inner surface 2311a. This structure enables the current collecting member 234 to be accommodated in the first recessed portion 2313, and can provide more space for the main body portion 221.

For example, the first connection portion 2221 is connected to the third inner surface 2341 of the current collecting member 234. The first connection portion 2221 is entirely accommodated in the first recessed portion 2313. The first connection portion 2221 and the current collecting member 234 are stacked, and the first connection portion 2221 is located on a side of the current collecting member 234 facing the main body portion 221.

The first connection portion 2221 and the current collecting member 234 may be fixed by welding, and the current collecting member 234 and the electrode terminal 232 may also be fixed by welding.

The tab 222 may further include a second connection portion 2222, the first connection portion 2221 is connected to the main body portion 221 through the second connection portion 2222, and the first connection portion 2221 is bent relative to the second connection portion 2222. In the thickness direction Z of the first body 2311, the first connection portion 2221 is bent and arranged on a side of the second connection portion 2222 departing from the main body portion 221.

In some embodiments, please refer to FIG. 6. FIG. 6 is an exploded view of the end cover assembly 23 shown in FIG. 5, and the electrode terminal 232 is mounted on the first protruding portion 2312.

When a plurality of battery cells 20 are electrically connected through a bus component 40 (shown in FIG. 3), since the first protruding portion 2312 protrudes from the first outer surface 2311b in the direction departing from the main body portion 221, the electrode terminal 232 is mounted on the first protruding portion 2312 to facilitate connection (for example, welding) between the electrode terminal 232 and the bus component 40, and facilitate to output electric energy of the battery cell 20 through the electrode terminal 232.

In some embodiments, please continue to refer to FIG. 6, when the end cover assembly 23 includes two electrode terminals 232, a first protruding portion 2312 may be formed on the end cover 231, and the two electrode terminals 232 may be mounted on one first protruding portion 2312. This structure can simplify a structure of the end cover 231 and facilitate molding and manufacturing of the end cover 231.

In this embodiment, the two electrode terminals 232 may be arranged along a length direction X of the first body 2311, and the two electrode terminals 232 may be the positive electrode terminal 232a and the negative electrode terminal 232b. Both a current collecting member 234 (shown in FIG. 4) connected between the positive electrode terminal 232a and the positive tab 222a (shown in FIG. 4) and another current collecting member 234 (shown in FIG. 4) connected between the negative electrode terminal 232b and the negative tab 222b (shown in FIG. 4) may be at least partially accommodated in a same first recessed portion 2313 (shown in FIG. 5).

In other embodiments, when the end cover assembly 23 includes two electrode terminals 232, two first protruding portions 2312 may be formed on the end cover 231, and the two electrode terminals 232 are respectively mounted on the two first protruding portions 2312.

In this embodiment, the two electrode terminals 232 may be arranged along a length direction X of the first body 2311, and the two electrode terminals 232 may be the positive electrode terminal 232a and the negative electrode terminal 232b. A current collecting member 234 connected between the positive electrode terminal 232a and the positive tab 222a may be at least partially accommodated in the first recessed portion 2313, and another current collecting member 234 connected between the negative electrode terminal 232b and the negative tab 222b may be at least partially accommodated in another first recessed portion 2313.

It should be noted that, according to some of the foregoing embodiments, the electrode terminal 232 may be mounted on the first protruding portion 2312 of the end cover 231. In other embodiments, the electrode terminal 232 may also be mounted on other parts of the end cover 231, for example, the electrode terminal 232 is mounted on an area other than the first protruding portion 2312 on the first body 2311.

Please continue to refer to FIG. 6, the end cover assembly 23 further includes a first insulating piece 235. The first insulating piece 235 is disposed on a side of the end cover 231 facing the main body portion 221 (shown in FIG. 5), and the first insulating piece 235 is configured to isolate the end cover 231 from the electrode assembly 22 (shown in FIG. 5).

The first insulating piece 235 can serve to isolate the end cover 231 from the electrode assembly 22, and reduce the risk of battery cell 20 short circuit caused by contact between the end cover 231 and the electrode assembly 22.

In this embodiment, the first insulating piece 235 is made of insulating material, and the first insulating piece 235 may be made of rubber, plastic, or other materials. The end cover 231 may be made of metal, such as copper, iron, aluminum, stainless steel, and aluminum alloy.

It should be noted that, in the embodiments of this application, when the end cover assembly 23 is not provided with the first insulating piece 235, the end cover 231 may be made of insulating material.

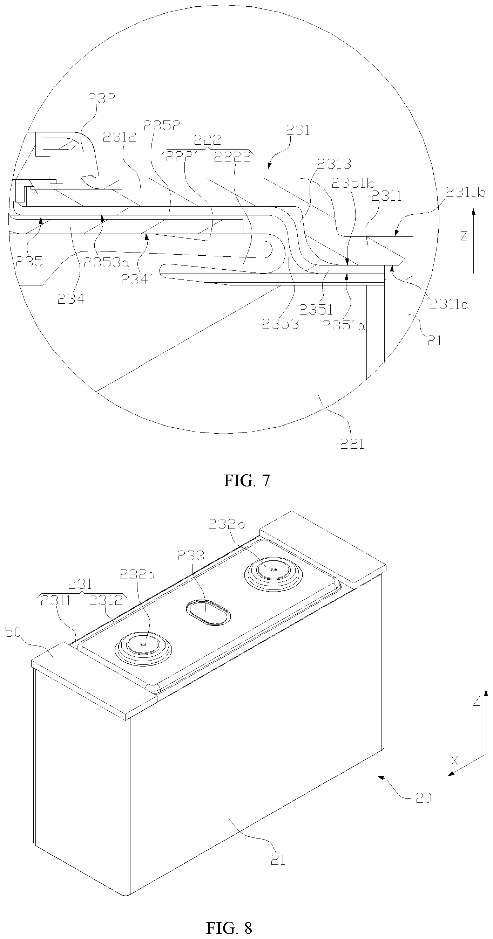

Please refer to FIG. 7. FIG. 7 is a partially enlarged view of A of the battery cell 20 shown in FIG. 5. The first insulating piece 235 includes a second body 2351 and a second protruding portion 2352. The second body 2351 has a second inner surface 2351a and a second outer surface 2351b arranged opposite to each other in the thickness direction Z, and the second outer surface 2351b faces the first inner surface 2311a. The second protruding portion 2352 protrudes from the second outer surface 2351b in the direction departing from the main body portion 221, and a second recessed portion 2353 recessed from the second inner surface 2351a in the direction departing from the main body portion 221 is formed at a position corresponding to the second protruding portion 2352 on the second body 2351. The first recessed portion 2313 is configured to accommodate the second protruding portion 2352, and the second recessed portion 2353 is configured to accommodate at least a part of the tab 222.

The second recessed portion 2353 of the first insulating piece 235 serves to accommodate the tab 222, so as to provide more space for the main body portion 221. The arrangement of the second protruding portion 2352 can enable the second recessed portion 2353 to recess as far as possible in the direction departing from the main body portion 221, which is beneficial for the tab 222 to be accommodated in the second recessed portion 2353. In addition, since the second protruding portion 2352 of the first insulating piece 235 is accommodated in the first recessed portion 2313, the first insulating piece 235 and the end cover 231 are more compact, and the space occupied by the first insulating piece 235 inside the housing 21 is reduced, which can provide more space for the main body portion 221, and is beneficial to increase the energy density of the battery cell 20.

The second recessed portion 2353 includes a second bottom surface 2353a, and the second bottom surface 2353a is farther from the main body portion 221 than the second outer surface 2351b, so that the second recessed portion 2353 is recessed into the second protruding portion 2352.

It should be noted that the second protruding portion 2352 of the first insulating piece 235 may be in a one-to-one correspondence with the first recessed portion 2313 of the end cover 231. For example, a second protruding portion 2352 is formed on the first insulating piece 235, a first recessed portion 2313 is formed on the end cover 231, and one first protruding portion 2312 is correspondingly accommodated in the first recessed portion 2313; for another example, two second protruding portions 2352 are formed on the first insulating piece 235, two first recessed portions 2313 are formed on the end cover 231, and the two second protruding portions 2352 are respectively accommodated in the two first recessed portions 2313. Certainly, there may be a plurality of second protruding portions 2352 accommodated in one first recessed portion 2313. For example, one first recessed portion 2313 is formed on the end cover 231, two second protruding portions 2352 are formed on the first insulating piece 235, and both of the two second protruding portions 2352 are accommodated in one first recessed portion 2313.

There may be a certain distance between the second outer surface 2351b and the first inner surface 2311a, or the second outer surface 2351b may directly abut against the first inner surface 2311a. If there is a distance between the second outer surface 2351b and the first inner surface 2311a, the second protruding portion 2352 is partially accommodated in the first recessed portion 2313; if the second outer surface 2351b abuts against the first inner surface 2311a, the second protruding portion 2352 is entirely accommodated in the first recessed portion 2313, so that the first insulating piece 235 and the end cover 231 become more compact. For example, FIG. 7 shows a situation where the second outer surface 2351b directly abuts against the first inner surface 2311a.

For example, the third inner surface 2341 of the current collecting member 234 is farther from the main body portion 221 of the electrode assembly 22 than the second inner surface 2351a of the first insulating piece 235. The first connection portion 2221 connecting the tab 222 and the current collecting member 234 is entirely located in the second recessed portion 2353.

In some embodiments, when the battery cell 20 adjusts the temperature through the thermal management component 50 (not shown in FIG. 7), the thermal management component 50 may be attached to a plurality of positions of the battery cell 20. For example, the thermal management component 50 is attached to the housing 21 of the battery cell 20. For another example, the thermal management component 50 is attached to the end cover 231 of the battery cell 20.

When the thermal management component 50 is attached to the end cover 231 of the battery cell 20, the thermal management component 50 may be attached to the first protruding portion 2312 of the end cover 231, or the thermal management component 50 may be attached to the first body 2311 of the end cover 231. The attachment herein may be only in contact but not connected together, or may be connected together.

In some embodiments, please refer to FIG. 8. FIG. 8 is a schematic view of connection between the battery cell 20 and the thermal management component 50 shown in FIG. 5. The first body 2311 of the end cover 231 is configured to be attached to the thermal management component 50, so that the battery cell 20 may transfer heat with the heat management component 50 through the first body 2311. In this way, heat transfer efficiency between the battery cell 20 and the thermal management component 50 is improved, so that the temperature of the battery cell 20 can be adjusted through the thermal management component 50.

For example, to improve stability and firmness of the battery cell 20, the first body 2311 may be connected to the thermal management component 50 through an adhesive layer, and the adhesive layer may be a thermally conductive adhesive.

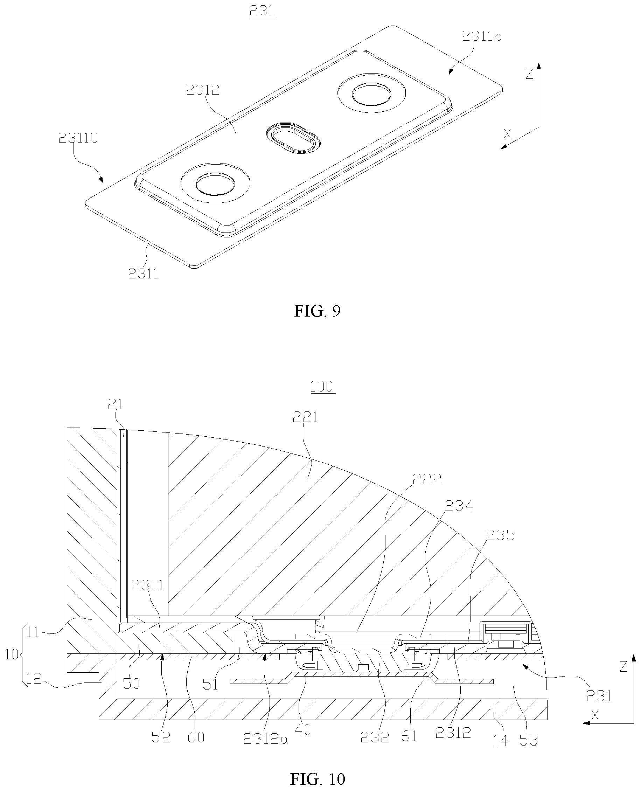

Optionally, please refer to FIG. 9. FIG. 9 is a schematic structural view of the end cover 231 shown in FIG. 8. The first outer surface 2311b of the first body 2311 includes a heat dissipation area 2311c. A projection of the heat dissipation area 2311c in the thickness direction Z of the first body 2311 does not overlap a projection of the first protruding portion 2312 in the thickness direction Z of the first body 2311, and the heat dissipation area 2311c is configured to attach to the thermal management component 50. In this structure, the thermal management component 50 does not overlap the first protruding portion 2312, and the first protruding portion 2312 and the thermal management component 50 share the space in the thickness direction Z of the first body 2311, which is beneficial to increase the energy density of the battery 100.

It should be noted that if the projection of the heat dissipation area 2311c in the thickness direction Z of the first body 2311 just borders on the projection of the first protruding portion 2312 in the thickness direction Z of the first body 2311, this also belongs a case where the projection of the heat dissipation area 2311c in the thickness direction Z of the first body 2311 does not overlap the projection of the first protruding portion 2312 in the thickness direction Z of the first body 2311.

In some embodiments, please refer to FIG. 10. FIG. 10 is a schematic view of installation of the battery 100 according to some embodiments of this application. The thermal management component 50 is located at the bottom of the battery cell 20. The thermal management component 50 is configured to support the first body 2311, that is, the thermal management component 50 not only serves to manage the heat of the battery cell 20 through the first body 2311, but also serves to support the first body 2311, so that the first protruding portion 2312 and the heat management component 50 share the space in the thickness direction Z of the first body 2311, which is beneficial to increase the energy density of the battery 100.

The thermal management component 50 is supported on the first body 2311. It may be understood that the battery cell 20 is in an upside-down state, so that the end cover 231 is located at the bottom of the housing 21, and the opening of the housing 21 is arranged downwards.

It may be understood that the thermal management component 50 may be connected to other structures to provide a support force for the battery cell 20. For example, the thermal management component 50 may be connected to the box body 10 to provide the support force for the battery cell 20, or a support piece may be disposed at the bottom of the box body 10 to provide the thermal management component 50 with the support force for the battery cell 20.

For example, the thermal management component 50 is provided with an avoidance hole 51 for accommodating at least a part of the first protruding portion 2312. In this structure, the battery cell 20 and the thermal management component 50 are more compact, and the first protruding portion 2312 and the thermal management component 50 share the space in the thickness direction Z of the first body 2311, which is beneficial to increase the energy density of the battery 100.

It should be noted that there may be a plurality of avoidance holes 51 on the thermal management component 50. At least a part of the electrode terminal 232 of each battery cell 20 may be accommodated in one avoidance hole 51, or at least a part of the electrode terminal 232 of the plurality of battery cells 20 is accommodated in one avoidance hole 51. For example, a plurality of battery cells 20 in the battery 100 are arranged in a plurality of rows, and at least a part of the electrode terminal 232 of each row of battery cell 20 is accommodated in one avoidance hole 51.

In some embodiments, please continue to refer to FIG. 10, the first protruding portion 2312 has a third outer surface 2312a departing from the first body 2311, and the thermal management component 50 has a fourth outer surface 52 departing from the first body 2311. In the thickness direction Z of the main body 2311, the fourth outer surface 52 is closer to the main body 221 than the third outer surface 2312a, or the fourth outer surface 52 is flush with the third outer surface 2312a.

When the battery 100 is impacted on the bottom, since in the thickness direction Z of the main body 2311, the fourth outer surface 52 is closer to the main body 221 than the third outer surface 2312a, or the fourth outer surface 52 is flush with the third outer surface 2312a, this structure enables an impact force received by the battery 100 may be transmitted to the first protruding portion 2312 to disperse the impact force through the end cover, and reduce a risk of the impact force directly acting on the thermal management component 50 and damaging the thermal management component 50.

For example, FIG. 10 shows a situation where the fourth outer surface 52 is flush with the third outer surface 2312a.

In some embodiments, the battery 100 may further include a second insulating piece 60, and in the thickness direction Z of the first body 2311, the second insulating piece 60 is disposed on a side of the first body 2311 departing from the main body portion 221, and the second insulating piece 60 covers the thermal management component 50 and at least part of the first protruding portion 2312.

The second insulating piece 60 has an insulating and isolating effect on the thermal management component 50 and reduces a conductive risk of the thermal management component 50. In addition, the second insulating piece 60 may also serve to block water vapor of the thermal management component 50 from entering a high-voltage connection area. The high-voltage connection area herein refers to an area where a plurality of battery cells 20 are electrically connected, for example, an area where the plurality of battery cells 20 are connected through the bus component 40. When the fourth outer surface 52 is flush with the third outer surface 2312a, the second insulating piece 60 may be attached to the fourth outer surface 52 and the third outer surface 2312a to further reduce the risk of the water vapor of the thermal management component 50 entering the high-pressure connection area.

The second insulating piece 60 is made of insulating material, and the second insulating piece 60 may be made of rubber, plastic, or other materials.

Optionally, the second insulating piece 60 is provided with a through hole 61 for the electrode terminal 232 to extend out, so as to facilitate connection between the electrode terminal 232 and the bus component 40, thereby realizing the electrical connection of the plurality of battery cells 20.

It may be understood that in this embodiment, the electrode terminal 232 is mounted on the first protruding portion 2312.

In some embodiments, an accommodation gap 53 is formed between the thermal management component 50 and a bottom wall 14 of the box body 10; and the accommodation gap 53 is configured to accommodate at least a part of the electrode terminal 232, so as to make reasonable use of the accommodation gap 53 between the thermal management component 50 and the bottom wall 14 of the box body 10, which is beneficial to increase the energy density of the battery 100. The bottom wall 14 of the box body 10 herein is a wall of the box body 10 opposite to the electrode terminal 232.

For example, the box body 10 includes a first part 11 and a second part 12, and the first part 11 and the second part 12 are covered with each other. When the battery 100 is inverted (the second part 12 is located at the bottom of the first part 11), the bottom wall 14 may be part or all of the second part 12.

It should be noted that the accommodation gap 53 is not an area formed between an entity part that is formed after the avoidance hole 51 is removed from the thermal management component 50 and the bottom wall 14, but an area formed between the bottom wall 14 and the thermal management component 50 as a whole. In other words, the accommodation gap 53 includes an area between the avoidance hole 51 and the bottom wall 14.

In some embodiments, when the plurality of battery cells 20 are electrically connected through the bus component 40, the bus component 40 may be connected to the electrode terminal 232, and the bus component 40 may be accommodated in the accommodation gap 53 as a whole to make reasonable use of the accommodation gap 53 between the thermal management component 50 and the bottom wall 14 of the box body 10, and reduce the space occupied by the bus component 40 inside the box body 10, which is beneficial to increase the energy density of the battery 100.

For example, the bus component 40 may be welded to the electrode terminal 232.

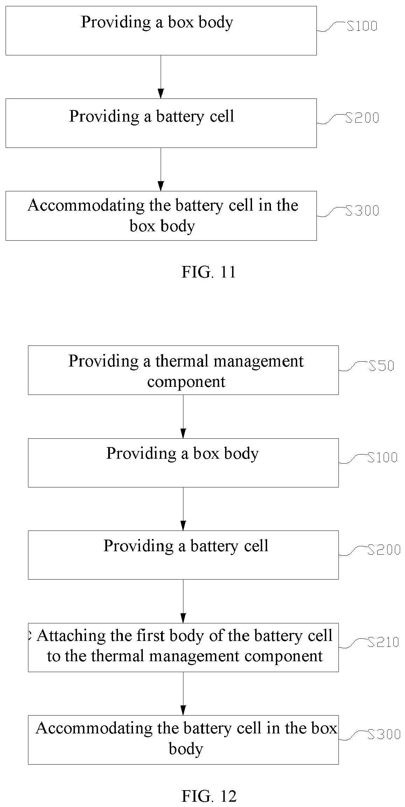

The embodiments of this application further provide a battery 100 manufacturing method. Please refer to FIG. 11, FIG. 11 is a flowchart of a battery 100 manufacturing method according to some embodiments of this application. The battery 100 manufacturing method includes:
S100: Providing a box body 10.
S200: Providing a battery cell 20.
S300: Accommodating the battery cell 20 in the box body 10.

The battery cell 20 includes a housing 21, an electrode assembly 22, and an end cover assembly 23. The housing 21 has an opening. The electrode assembly 22 is configured to be accommodated in the housing 21, and the electrode assembly 22 includes a main body portion 221 and a tab 222. The end cover assembly 23 includes an end cover 231 and an electrode terminal 232, where the end cover 231 is configured to cover the opening, the electrode terminal 232 is mounted on the end cover 231, and the electrode terminal 232 is configured to be electrically connected to the tab 222.

The end cover 231 includes a first body 2311 and a first protruding portion 2312, the first body 2311 has a first inner surface 2311a and a first outer surface 2311b arranged opposite to each other in a thickness direction Z of the first body, the first protruding portion 2312 protrudes from the first outer surface 2311b in a direction departing from the main body portion 221, a first recessed portion 2313 recessed from the first inner surface 2311a in the direction departing from the main body portion 221 is formed at a position corresponding to the first protruding portion 2312 on the first body 2311, and the first recessed portion 2313 is configured to accommodate at least a part of the tab 222.

In the foregoing method, the sequence of step S100 and step S200 is not limited. For example, step S200 may be performed first, and then step S100 is performed.

In some embodiments, please refer to FIG. 12, FIG. 12 is a flowchart of a battery 100 manufacturing method according to some other embodiments of this application. The battery 100 manufacturing method may further include:
S50: Providing a thermal management component 50, and the thermal management component 50 is configured to adjust a temperature of the battery cell 20.
S210: Attaching the first body 2311 of the battery cell 20 to the thermal management component 50.

In this embodiment, the sequence of step S50, step S100, and step S200 is not limited.

Certainly, step S210 may be performed before step S300, that is, the first body 2311 of the battery cell 20 is attached to the thermal management component 50, and then both the battery cell 20 and the thermal management component 50 are accommodated in the box body 10; step S210 may also be performed after step S300, that is, the battery cell 20 is accommodated in the box body 10, and then the first body 2311 of the battery cell 20 is attached to the thermal management component 50.

It should be noted that, for relevant structures of the battery 100 manufactured in the battery 100 manufacturing method provided in the foregoing embodiments, please refer to the battery 100 provided in the foregoing embodiments.

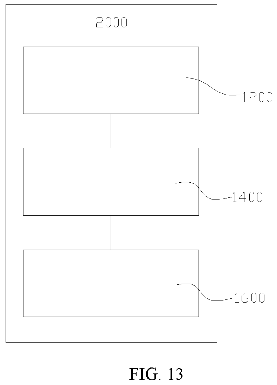

In addition, the embodiments of this application further provide a battery 100 manufacturing device 2000. Please refer to FIG. 13, FIG. 13 is a schematic block view of a battery 100 manufacturing device 2000 according to some embodiments of this application. The manufacturing device 2000 includes a first providing apparatus 1200, a second providing apparatus 1400, and an assembling apparatus 1600. The first providing apparatus 1200 is configured to provide a box body 10. The second providing apparatus 1400 is configured to provide a battery cell 20. The assembling apparatus 1600 is configured to accommodate the battery cell 20 in the box body 10.

The battery cell 20 includes a housing 21, an electrode assembly 22, and an end cover assembly 23. The housing 21 has an opening. The electrode assembly 22 is configured to be accommodated in the housing 21, and the electrode assembly 22 includes a main body portion 221 and a tab 222. The end cover assembly 23 includes an end cover 231 and an electrode terminal 232, where the end cover 231 is configured to cover the opening, the electrode terminal 232 is mounted on the end cover 231, and the electrode terminal 232 is configured to be electrically connected to the tab 222.

The end cover 231 includes a first body 2311 and a first protruding portion 2312, the first body 2311 has a first inner surface 2311a and a first outer surface 2311b arranged opposite to each other in a thickness direction Z of the first body, the first protruding portion 2312 protrudes from the first outer surface 2311b in a direction departing from the main body portion 221, a first recessed portion 2313 recessed from the first inner surface 2311a in the direction departing from the main body portion 221 is formed at a position corresponding to the first protruding portion 2312 on the first body 2311, and the first recessed portion 2313 is configured to accommodate at least a part of the tab 222.

In some embodiments, the manufacturing device 2000 may further include a third providing apparatus (not shown in the view), the third providing apparatus is configured to provide the thermal management component 50, and the assembling apparatus 1600 is further configured to attach the first body 2311 to the thermal management component 50.

It should be noted that, for relevant structures of the battery 100 manufactured through the battery 100 manufacturing device 2000 provided in the foregoing embodiments, please refer to the battery 100 provided in the foregoing embodiments.

It should be noted that the embodiments in this application and features in the embodiments may be combined with each other if there is no conflict.

The foregoing embodiments are only used to illustrate the technical solutions of this application, and are not used to limit this application. For a person skilled in the art, this application may have various modifications and changes.

## Claims

1. A battery cell (20), comprising:
a housing (21) with an opening;
an electrode assembly (22) for being accommodated in the housing (21), wherein the electrode assembly (22) comprises a main body portion (221) and a tab (222); and
an end cover assembly (23), comprising an end cover (231) and an electrode terminal (232), the end cover (231) is configured to cover the opening, the electrode terminal (232) is mounted on the end cover (231), and the electrode terminal (232) is configured to be electrically connected to the tab (222), wherein
the end cover (231) comprises a first body (2311) and a first protruding portion (2312), the first body (2311) has a first inner surface (2311a) and a first outer surface (2311b) arranged opposite to each other in a thickness direction of the first body (2311), the first protruding portion (2312) protrudes from the first outer surface (2311b) in a direction departing from the main body portion (221), a first recessed portion (2313), which is recessed from the first inner surface (2311a) in the direction departing from the main body portion (221), is formed at a position corresponding to the first protruding portion (2312) on the first body (2311), and the first recessed portion (2313) is configured to accommodate at least a part of the tab (222); and
wherein the end cover assembly (23) further comprises a first insulating piece (235); and
the first insulating piece (235) is disposed on a side of the end cover (231) facing the main body portion (221), and the first insulating piece (235) is configured to isolate the end cover (231) from the electrode assembly (22); and
wherein the first insulating piece (235) comprises a second body (2351) and a second protruding portion (2352), the second body (2351) has a second inner surface (2351a) and a second outer surface (2351b) arranged opposite to each other in the thickness direction, the second outer surface (2351b) faces the first inner surface (2311a), the second protruding portion (2352) protrudes from the second outer surface (2351b) in the direction departing from the main body portion (221), and a second recessed portion (2353) recessed from the second inner surface (2351a) in the direction departing from the main body portion (221) is formed at a position corresponding to the second protruding portion (2352) on the second body (2351); and
the first recessed portion (2313) is configured to accommodate the second protruding portion (2352), and the second recessed portion (2353) is configured to accommodate at least a part of the tab (222).

2. The battery cell (20) according to claim 1, wherein the first body (2311) is configured to be attached to a thermal management component (50), and the thermal management component (50) is configured to adjust a temperature of the battery cell (20).

3. The battery cell (20) according to claim 2, wherein the first outer surface (2311b) comprises a heat dissipation area (2311c), a projection of the heat dissipation area (2311c) in the thickness direction does not overlap a projection of the first protruding portion (2312) in the thickness direction, and the heat dissipation area (2311c) is configured to be attached to the thermal management component (50).

4. The battery cell (20) according to any one of claims 1 to 3, wherein the first recessed portion (2313) has a first bottom surface (2313a); and
in the thickness direction, the first bottom surface (2313a) is farther from the main body portion (221) than the first outer surface (2311b).

5. The battery cell (20) according to any one of claims 1 to 4, wherein the electrode terminal (232) is mounted on the first protruding portion (2312).

6. The battery cell (20) according to claim 5, wherein the end cover assembly (23) comprises two electrode terminals (232), and the two electrode terminals (232) are mounted on one first protruding portion (2312); or
the end cover assembly (23) comprises two electrode terminals (232) and two first protruding portions (2312) arranged along a length direction of the first body (2311), and the two electrode terminals (232) are respectively mounted on the two first protruding portions (2312).

7. The battery cell (20) according to any one of claims 1 to 6, wherein the battery cell (20) further comprises a current collecting member (234), and the electrode terminal (232) is electrically connected to the tab (222) through the current collecting member (234), wherein
the tab (222) comprises a first connection portion (2221) for being connected to the current collecting member (234), and at least a part of the first connection portion (2221) is accommodated in the first recessed portion (2313); and,
wherein the current collecting member (234) has a third inner surface (2341) facing the main body portion (221), and the third inner surface (2341) is farther from the main body portion (221) than the first inner surface (2311a).

8. A battery (100), comprising a box body (10) and the battery cell (20) according to any one of claims 1 to 7, wherein the box body (10) is configured to accommodate the battery cell (20).

9. The battery (100) according to claim 8, wherein the battery (100) further comprises a thermal management component (50), the thermal management component (50) is attached to the first body (2311), and the thermal management component (50) is configured to adjust a temperature of the battery cell (20); and
wherein the thermal management component (50) is located at the bottom of the battery cell (20), and the thermal management component (50) is configured to support the first body (2311).

10. The battery (100) according to claim 9, wherein the first protruding portion (2312) has a third outer surface (2312a) departing from the first body (2311), and the heat management component (50) has a fourth outer surface (52) departing from the first body (2311); and
in the thickness direction, the fourth outer surface (52) is closer to the main body portion (221) than the third outer surface (2312a), or the fourth outer surface (52) is flush with the third outer surface (2312a).

11. The battery (100) according to claim 9 or 10, wherein the battery (100) further comprises a second insulating piece (60), and in the thickness direction, the second insulating piece (60) is disposed on a side of the first body (2311) departing from the main body portion (221), and the second insulating piece (60) covers the thermal management component (50) and at least part of the first protruding portion (2312); and,
wherein the second insulating piece (60) is provided with a through hole (61) for the electrode terminal (232) to extend out.

12. The battery (100) according to any one of claims 9 to 11, wherein an accommodation gap (53) is formed between the thermal management component (50) and a bottom wall of the box body (10), and the accommodation gap (53) is configured to accommodate at least a part of the electrode terminal (232); and,
wherein the battery (100) further comprises a bus component (40), the bus component (40), is configured to realize electrical connection of a plurality of battery cells (20); and
the bus component (40), is connected to the electrode terminal (232), and the bus component (40), is entirely accommodated in the accommodation gap (53); and,
wherein the thermal management component (50) is provided with an avoidance hole (51), the avoidance hole (51) is configured to accommodate at least a part of the first protruding portion (2312).

13. A power consumption device, comprising the battery according to any one of claims 9 to 12.

## Patentansprüche

1. Batteriezelle (20), mit:
einem Gehäuse (21) mit einer Öffnung;
einer Elektrodenanordnung (22) zur Aufnahme in dem Gehäuse (21), wobei die Elektrodenanordnung (22) einen Hauptkörperabschnitt (221) und eine Lasche (222) umfasst; und
einer Endabdeckungsanordung (23), die eine Endabdeckung (231) und einen Elektrodenanschluss (232) umfasst, wobei die Endabdeckung (231) so aufgebaut ist, dass sie die Öffnung abdeckt, der Elektrodenanschluss (232) an der Endabdeckung (231) angebracht ist und der Elektrodenanschluss (232) so aufgebaut ist, dass er elektrisch mit der Lasche (222) verbunden ist, wobei die Endabdeckung (231) einen ersten Körper (2311) und einen ersten vorragenden Abschnitt (2312) aufweist, wobei der erste Körper (2311) eine erste innere Fläche (2311a) und eine erste äußere Fläche (2311b) aufweist, die in einer Dickenrichtung des ersten Körpers (2311) einander gegenüberliegend angeordnet sind, wobei der erste vorragende Abschnitt (2312) von der ersten äußeren Fläche (2311b) in einer von dem Hauptkörperabschnitt (221) weggehenden Richtung vorsteht, ein erster vertiefter Abschnitt (2313), der von der ersten inneren Fläche (2311a) in der von dem Hauptkörperabschnitt (221) ausgehenden Richtung vertieft ist, an einer dem ersten vorragenden Abschnitt (2312) entsprechenden Position an dem ersten Körper (2311) gebildet ist, und der erste vertiefte Abschnitt (2313) so aufgebaut ist, dass er wenigstens einen Teil der Lasche (222) aufnimmt; und
wobei die Endabdeckungsanordung (23) des Weiteren ein erstes Isolierstück (235) umfasst; und
das erste Isolierstück (235) auf einer dem Hauptkörperabschnitt (221) zugewandten Seite der Endabdeckung (231) angeordnet ist und das erste Isolierstück (235) aufgebaut ist, um die Endabdeckung (231) von der Elektrodenanordnung (22) zu isolieren; und
wobei das erste Isolierstück (235) einen zweiten Körper (2351) und einen zweiten vorragenden Abschnitt (2352) aufweist, der zweite Körper (2351) eine zweite innere Fläche (235la) und eine zweite äußere Fläche (2351b) aufweist, die in der Dickenrichtung einander gegenüberliegend angeordnet sind, wobei die zweite äußere Fläche (2351b) der ersten inneren Fläche (2311a) zugewandt ist, der zweite vorragende Abschnitt (2352) von der zweiten äußeren Fläche (2351b) in der vom Hauptkörperabschnitt (221) weggehenden Richtung vorsteht und ein zweiter vertiefter Abschnitt (2353), der von der zweiten inneren Fläche (235la) in der vom Hauptkörperabschnitt (221) weggehenden Richtung vertieft ist, an einer dem zweiten vorragenden Abschnitt (2352) entsprechenden Stelle am zweiten Körper (2351) gebildet ist; und
der erste vertiefte Abschnitt (2313) aufgebaut ist, um den zweiten vorragenden Abschnitt (2352) aufzunehmen, und der zweite vertiefte Abschnitt (2353) aufgebaut ist, um wenigstens einen Teil der Lasche (222) aufzunehmen.

2. Batteriezelle (20) nach Anspruch 1, wobei der erste Körper (2311) aufgebaut ist, um an einer Wärmemanagement-Komponente (50) befestigt zu werden, und die Wärmemanagement-Komponente (50) aufgebaut ist, um eine Temperatur der Batteriezelle (20) einzustellen.

3. Batteriezelle (20) nach Anspruch 2, wobei die erste äußere Fläche (2311b) eine Wärmeabgabefläche (231lc) umfasst, ein Vorsprung der Wärmeabgabefläche (231Ic) in der Dickenrichtung einen Vorsprung des ersten vorragenden Abschnitts (2312) in der Dickenrichtung nicht überlappt und die Wärmeabgabefläche (231lc) so aufgebaut ist, dass sie an der Wärmemanagement-Komponente (50) befestigt ist.

4. Batteriezelle (20) nach einem der Ansprüche 1 bis 3, wobei der erste vertiefte Abschnitt (2313) eine erste Bodenfläche (2313a) aufweist; und
die erste Bodenfläche (2313a) in Dickenrichtung weiter vom Hauptkörperabschnitt (221) entfernt ist als die erste äußere Fläche (2311b).

5. Batteriezelle (20) nach einem der Ansprüche 1 bis 4, wobei der Elektrodenanschluss (232) auf dem ersten vorragenden Abschnitt (2312) befestigt ist

6. Batteriezelle (20) nach Anspruch 5, wobei die Endabdeckungsanordung (23) zwei Elektrodenanschlüsse (232) umfasst und die beiden Elektrodenanschlüsse (232) an einem ersten vorragenden Abschnitt (2312) befestigt sind; oder
die Endabdeckungsanordung (23) umfasst zwei Elektrodenanschlüsse (232) und zwei erste vorragende Abschnitte (2312), die entlang einer Längsrichtung des ersten Körpers (2311) angeordnet sind, und die beiden Elektrodenanschlüsse (232) sind jeweils an den beiden ersten vorragenden Abschnitten (2312) befestigt.

7. Batteriezelle (20) nach einem der Ansprüche 1 bis 6, wobei die Batteriezelle (20) ferner ein Stromabnehmerelement (234) umfasst und der Elektrodenanschluss (232) über das Stromabnehmerelement (234) elektrisch mit der Lasche (222) verbunden ist, wobei
die Lasche (222) einen ersten Verbindungsabschnitt (2221) zum Verbinden mit dem Stromabnehmerelement (234) umfasst und zumindest ein Teil des ersten Verbindungsabschnitts (2221) in dem ersten vertieften Abschnitt (2313) aufgenommen ist; und
wobei das Stromabnehmerelement (234) eine dritte innere Fläche (2341) aufweist, die dem Hauptkörperabschnitt (221) zugewandt ist, und die dritte innere Fläche (2341) weiter von dem Hauptkörperabschnitt (221) entfernt ist als die erste innere Fläche (231a).

8. Batterie (100), die einen Dosenkörper (10) aufweist und die Batteriezelle (20) nach einem der Ansprüche I bis 7, wobei der Dosenkörper (10) aufgebaut ist, um die Batteriezelle (20) aufzunehmen.

9. Batterie (100) gemäß Anspruch 8, wobei die Batterie (100) ferner eine Wärmemanagement-Komponente (50) umfasst, die Wärmemanagement-Komponente (50) an dem ersten Körper (2311) angebracht ist und die Wärmemanagement-Komponente (50) so aufgebaut ist, dass sie eine Temperatur der Batteriezelle (20) einstellt; und
wobei die Wärmemanagement-Komponente (50) am Boden der Batteriezelle (20) angeordnet ist und die Wärmemanagement-Komponente (50) so aufgebaut ist, dass sie den ersten Körper (2311) trägt.

10. Batterie (100) nach Anspruch 9, wobei der erste vorragende Abschnitt (2312) eine dritte äußere Fläche (2312a) aufweist, die von dem ersten Körper (2311) weggeht, und die Wärmemanagement-Komponente (50) eine vierte äußere Fläche (52) aufweist, die von dem ersten Körper (2311) ausgeht; und
in Dickenrichtung die vierte äußere Fläche (52) näher am Hauptkörperabschnitt (221) als die dritte äußere Fläche (2312a) ist oder die vierte äußere Fläche (52) bündig mit der dritten äußeren Fläche (2312a) ist.

11. Batterie (100) nach Anspruch 9 oder 10, wobei die Batterie (100) ferner ein zweites Isolierstück (60) umfasst und das zweite Isolierstück (60) in Dickenrichtung auf einer Seite des ersten Körpers (2311) angeordnet ist, die vom Hauptkörperabschnitt (221) weggeht, und das zweite Isolierstück (60) die Wärmemanagement-Komponente (50) und wenigstens einen Teil des ersten vorragenden Abschnitts (2312) abdeckt; und
wobei das zweite Isolierstück (60) mit einer Durchgangsbohrung (61) versehen ist, aus der der Elektrodenanschluss (232) herausragt.

12. Batterie (100) nach einem der Ansprüche 9 bis 11, wobei ein Aufnahmespalt (53) zwischen der Wärmemanagement-Komponente (50) und einer Bodenwand des Dosenkörpers (10) gebildet ist und der Aufnahmespalt (53) so aufgebaut ist, dass er zumindest einen Teil des Elektrodenanschlusses (232) aufnimmt; und wobei die Batterie (100) ferner eine Sammelschienenkomponente (40) umfasst, wobei die Sammelschienenkomponente (40) aufgebaut ist, um eine elektrische Verbindung einer Vielzahl von Batteriezellen (20) zu realisieren; und
die Sammelschienenkomponente (40) mit dem Elektrodenanschluss (232) verbunden ist und die Sammelschienenkomponente (40) vollständig in der Aufnahmespalte (53) aufgenommen ist; und
wobei die Wärmemanagement-Komponente (50) mit einem Ausweichloch versehen ist (51) ist, wobei das Ausweichloch (51) so aufgebaut, dass es wenigstens einen Teil des ersten vorragenden Abschnitts (2312) aufnimmt.

13. Vorrichtung zur Leistungsaufnahme, mit der Batterie nach einem der Ansprüche 9 bis 12.

## Revendications

1. Cellule de batterie (20) comprenant :
un boîtier (21) avec une ouverture,
un ensemble d'électrode (22) destiné à être logé dans le boîtier (21), l'ensemble d'électrode (22) comprenant une partie de corps principal (221) et une languette (222), et
un ensemble de couverture d'extrémité (23) comportant une couverture d'extrémité (231) et une borne d'électrode (232), la couverture d'extrémité (231) étant configurée pour couvrir l'ouverture, la borne d'électrode (232) étant montée sur la couverture d'extrémité (231) et la borne d'électrode (232) étant configurée pour être reliée électriquement à la languette (222),
la couverture d'extrémité (231) comprenant un premier corps (2311) et une première partie proéminente (2312), le premier corps (2311) ayant une première surface intérieure (2311a) et une première surface extérieure (2311b) agencées à l'opposé l'une de l'autre dans la direction de l'épaisseur du premier corps (2311), la première partie proéminente (2312) étant en saillie sur la première surface extérieure (2311b) dans une direction partant de la partie de corps principal (221), une première partie en retrait (2313) qui est en retrait de la première surface intérieure (2311a) dans une direction partant de la partie de corps principal (221), étant formée à une position correspondant à la première partie proéminente (2312) sur le premier corps principal (2311) et la première partie en retrait (2313) étant configurée pour loger au moins une partie de la languette (222), et
l'ensemble de couverture d'extrémité (23) comprenant en outre une première pièce isolante (235), et
la première pièce isolante (235) étant disposée à un côté de la couverture d'extrémité (231) qui est en regard de la partie de corps principal (221) et la première pièce isolante (235) étant configurée pour isoler la couverture d'extrémité (231) de l'ensemble d'électrode (22), et
la première pièce isolante (235) comprenant un deuxième corps (2351) et une deuxième partie proéminente (2352), le deuxième corps (2351) ayant une deuxième surface intérieure (2351a) et une deuxième surface extérieure (2351b) agencées à l'opposée l'une de l'autre dans la direction de l'épaisseur, la deuxième surface extérieure (2351b) étant en regard de la première surface intérieure (2311a), la deuxième partie proéminente (2352) étant en saillie sur la deuxième surface extérieure (2351b) dans la direction partant de la partie de corps principal ( 221), et
une deuxième partie en retrait (2353) qui est en retrait de la deuxième surface intérieure (2351a) dans la direction partant de la partie de corps principal (221), étant formée à une position correspondant à la deuxième partie proéminente (2352) sur le deuxième corps principal (2351), et
la première partie en retrait (2313) étant configurée pour loger la deuxième partie proéminente (2352) et la deuxième partie en retrait (2353) étant configurée pour loger au moins une partie de la languette (222).

2. Cellule de batterie (20) selon la revendication 1, le premier corps (2311) étant configuré pour être lié à un composant de gestion thermique (50) et le composant de gestion thermique (50) étant configuré pour régler une température de la cellule de batterie (20).

3. Cellule de batterie (20) selon la revendication 2, la première surface extérieure (2311b) comprenant une zone de dissipation de chaleur (2311c), une étendue de la zone de dissipation de chaleur (2311c) dans la direction de l'épaisseur ne se chevauchant pas avec une étendue de la première partie proéminente (2312) dans la direction de l'épaisseur, et la zone de dissipation de chaleur (2311c) étant configurée pour être liée au composant de gestion thermique (50).

4. Cellule de batterie (20) selon l'une des revendications 1 à 3, la première partie en retrait (2313) ayant une première surface de fond (2313a) et
dans la direction de l'épaisseur, la première surface de fond (2313a) étant plus loin de la partie de corps principal (221) que la première surface extérieure (2311b).

5. Cellule de batterie (20) selon l'une des revendications 1 à 4, la borne d'électrode (232) étant montée sur la première partie proéminente (2312).

6. Cellule de batterie (20) selon la revendication 5, l'ensemble de couverture d'extrémité (23) comprenant deux bornes d'électrode (232) et les deux bornes d'électrode (232) étant montées sur une première partie proéminente (2312), ou l'ensemble de couverture d'extrémité (23) comprenant deux bornes d'électrode (232) et deux premières parties proéminentes (2312) agencées le long d'une direction de longueur du premier corps (2311), et les deux bornes d'électrode (232) étant montées respectivement sur les deux premières parties proéminentes (2312).

7. Cellule de batterie (20) selon l'une des revendications 1 à 6, la cellule de batterie (20) comprenant en outre un élément collecteur de courant (234) et la borne d'électrode (232) étant reliée électriquement à la languette (222) par l'élément collecteur de courant (234),
la languette (222) comprenant une première partie de connexion (2221) destinée à être reliée à l'élément collecteur de courant (234) et au moins une partie de la première partie de connexion (2221) étant logée dans la première partie en retrait (2313), et
l'élément collecteur de courant (234) ayant une troisième surface intérieure (2341) qui est en regard de la partie de corps principal (221), et la troisième surface intérieure (2341) étant plus loin de la partie de corps principal (221) que la première surface intérieure (2311a).

8. Batterie (100) comprenant un corps de caisse (10) et la cellule de batterie (20) selon l'une des revendications 1 à 7, le corps de caisse (10) étant configuré pour loger la cellule de batterie (20).

9. Batterie (100) selon la revendication 8, la batterie (100) comprenant en outre un composant de gestion thermique (50), le composant de gestion thermique (50) étant lié au premier corps (2311) et le composant de gestion thermique (50) étant configuré pour régler une température de la cellule de batterie (20), et
le composant de gestion thermique (50) étant situé au fond de la cellule de batterie (20) et le composant de gestion thermique (50) étant configuré pour porter le premier corps (2311).

10. Batterie (100) selon la revendication 9, la première partie proéminente (2312) ayant une troisième surface extérieure (2312a) partant du premier corps (2311) et le composant de gestion thermique (50) ayant une quatrième surface extérieure (52) partant du premier corps (2311) et
dans la direction de l'épaisseur, la quatrième surface extérieure (52) étant plus proche de la partie de corps principal (221) que la troisième surface extérieure (2312a) ou la quatrième surface extérieure (52) étant affleurant avec la troisième surface extérieure (2312a).

11. Batterie (100) selon la revendication 9 ou 10, la batterie (100) comprenant en outre une deuxième pièce isolante (60), et dans la direction de l'épaisseur, la deuxième pièce isolante (60) étant disposée sur un côté du premier corps (2311) partant de la partie de corps principal (211), et la deuxième pièce isolante (60) couvrant l'élément de gestion thermique (50) et au moins une partie de la première partie proéminente (2312), et
la deuxième pièce isolante (60) étant pourvue d'un trou de passage (61), afin que la borne d'électrode (232) puisse s'étendre vers l'extérieur.

12. Batterie (100) selon l'une des revendications 9 à 11, une fente de logement (53) étant formée entre le composant de gestion thermique (50) et une paroi de fond du corps de caisse (10), et la fente de logement (53) étant configurée pour loger au moins une partie de la borne d'électrode (232), et
la batterie (100) comprenant en outre un composant de bus (40), le composant de bus (40) étant configuré pour établir une connexion électrique d'une pluralité de cellules de batterie (20) et
le composant de bus (40) étant relié à la borne d'électrode (232) et le composant de bus (40) étant entièrement logé dans la fente de logement (53), et
le composant de gestion thermique (50) étant pourvu d'un trou d'évitement (51), le trou d'évitement (51) étant configuré pour loger au moins une partie de la première partie proéminente (2312).

13. Dispositif consommant de l'énergie, comprenant la batterie selon l'une des revendications 9 à 12.
